# EUROPEAN PATENT APPLICATION

(11) **EP 4 773 413 A1**
(43) Date of publication of application: **08.07.2026**
(21) Application number: 24859185.1
(22) Date of filing: 10.07.2024
(51) Int. Cl.: H01M 50/536, H01G 11/86, H01M 10/04, H01M 10/0587, H01M 50/103, H01M 50/107, H01M 50/528, H01M 50/533

(54) **METHOD FOR MANUFACTURING ELECTRIC POWER STORAGE DEVICE, AND ELECTRIC POWER STORAGE DEVICE**

(30) Priority: 30.08.2023 JP 2023140230
(71) Applicant: Panasonic Intellectual Property Management Co., Ltd., Kadoma-shi, Osaka 571-0057 (JP)
(72) Inventor: KUMAZAWA Seiji, Kadoma-shi, Osaka 571-0057 (JP); TSUJI Yuta, Kadoma-shi, Osaka 571-0057 (JP); MORI Masahiro, Kadoma-shi, Osaka 571-0057 (JP); TAYAMOTO Masato, Kadoma-shi, Osaka 571-0057 (JP)
(74) Representative: Novagraaf International SA
(86) International application number: PCT/JP2024/024940
(87) International publication number: WO 2025/047140

(57) **Abstract**

A power storage device manufacturing method includes: a first preparation step of preparing a wound electrode group 50 including a first electrode 51 and a second electrode, the first electrode 51 including a metal foil portion 52 exposed at one end of the electrode group 50 in the axial direction; a second preparation step of preparing a current collector plate 80 including a central portion 81 and an arm portion 82; a third preparation step of preparing a bottomed cylindrical case; a first welding step of welding the metal foil portion 52 and the arm portion 82 together at a line weld part LW using a line laser beam formed using a diffractive optical element; and a second welding step of housing the electrode group 50 and the current collector plate 80 in the case, and welding the central portion 81 and the inner bottom surface of the case together at a central weld part CW. In the first welding step, a spot-shaped melt mark is formed at a part of the central portion 81 that is located on the outer circumferential side relative to the central weld part CW by zero-order light emitted from the diffractive optical element. Thus, the manufacturing costs can be reduced.

## Description

### [Technical Field]

The present disclosure relates to a power storage device manufacturing method and a power storge device.

### [Background Art]

Batteries having a so-called end face current collector configuration are conventionally known (e.g., see Patent Literature 1). The battery of Patent Literature 1 includes a wound electrode group and a current collector plate welded to a protruding foil portion of the electrode group. For the welding, laser welding is used, for example.

### [Citation List]

### [Patent Literature]

Patent Literature 1: Japanese Laid-Open Patent Publication No. 2010-257851

### [Summary of Invention]

### [Technical Problem]

However, the protruding foil portion and the current collector plate are welded at many welding points, and it takes a certain amount of time to perform laser welding on all of the points. This leads to an increase in costs for manufacturing a battery (or a power storage device). In view of such a circumstance, one of the objects of the present disclosure is to reduce the manufacturing costs.

### [Solution to Problem]

One aspect of the present disclosure relates to a storage device manufacturing method. The manufacturing method includes: a first preparation step of preparing a wound electrode group including a first electrode and a second electrode, the first electrode including a metal foil portion exposed at one end of the electrode group in an axial direction; a second preparation step of preparing a current collector plate including a central portion and at least one arm portion extending from the central portion toward a periphery; a third preparation step of preparing a case having a bottomed cylindrical shape; a first welding step of forming a laser beam with a line shape using a diffractive optical element, and welding the metal foil portion and the at least one arm portion together at a respective line weld part using the laser beam; and a second welding step of housing the electrode group and the current collector plate in the case, and welding the central portion and an inner bottom surface of the case together at a central weld part, wherein in the first welding step, a spot-shaped melt mark is formed at a part of the central portion that is located on an outer circumferential side relative to the central weld part by zero-order light emitted from the diffractive optical element.

Another aspect of the present disclosure relates to a storage device. The storage device includes: a wound electrode group including a first electrode and a second electrode; a case with a bottomed cylindrical shape that houses the electrode group; and a current collector plate electrically connected to the first electrode and the case, wherein the first electrode includes a metal foil portion exposed at one end of the electrode group in an axial direction, the current collector plate includes a central portion welded to an inner bottom surface of the case at a central weld part, and at least one arm portion that extends from the central portion toward a periphery and that is welded to the metal foil portion at a line weld part, and a spot-shaped melt mark is formed at a part of the central portion that is located on an outer circumferential side relative to the central weld part.

### [Advantageous Effects of Invention]

According to the present disclosure, the manufacturing costs can be reduced.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic cross-sectional view of an example of a power storage device according to the present disclosure.
[FIG. 2] FIG. 2 is a bottom view of an electrode group and a negative electrode current collector plate.
[FIG. 3] FIG. 3 is a bottom view of another example of the electrode group and the negative electrode current collector plate.

### [Description of Embodiments]

Embodiments of a power storage device manufacturing method and a power storage device according to the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained.

### (Power Storage Device Manufacturing Method)

The power storage device manufacturing method according to the present disclosure includes a first preparation step, a second preparation step, a third preparation step, a first welding step, and a second welding step. The power storage device may be a battery or a capacitor.

In the first preparation step, a wound electrode group including a first electrode and a second electrode is prepared. The first electrode of the electrode group includes a metal foil portion exposed at one end of the electrode group in the axial direction. The electrode group may be configured by winding the first electrode and the second electrode with a separator therebetween. The outer shape of the electrode group may be columnar or prismatic, for example. One of the first electrode and the second electrode is a positive electrode, and the other of the first electrode and the second electrode is a negative electrode.

The first electrode may include a first current collector having an elongated sheet shape (or band shape) and a first active material layer formed on the surface of the first current collector. When the first electrode is a negative electrode of a lithium-ion secondary battery, the first current collector may be formed of a copper foil or a copper alloy foil. When the first electrode is a negative electrode of a lithium-ion secondary battery, the first active material layer may contain a negative electrode active material (e.g., a carbonaceous material or a silicon-contain material), a conductive agent, and a binder, for example. Note that the first active material layer may not be provided.

The second electrode may include a second current collector having an elongated sheet shape (or a band shape) and a second active material layer formed on the surface of the second current collector. When the second electrode is a positive electrode of a lithium-ion secondary battery, the second current collector may be formed of an aluminum foil or an aluminum alloy foil. When the second electrode is a positive electrode of a lithium-ion secondary battery, the second active material layer may contain a positive electrode active material (e.g., a lithium-containing transition metal oxide), a conductive agent, and a binder, for example.

The separator may be formed of a porous sheet having ion permeability and insulating properties. Examples of the porous sheet include a thin film having micropores, a woven fabric, and a nonwoven fabric.

In the second preparation step, a current collector plate including a central portion and at least one arm portion extending from the central portion toward the periphery (or radially outward) is prepared. The current collector plate may be made of a metal whose main component is iron, for example. The central portion may have a circular or polygonal flat plate shape, for example. The arm portion may extend outward in the radial direction from the outer end of the central portion. The number of arm portions is not particularly limited, and may be 3 or more and 6 or less, for example.

In the third preparation step, a case having a bottomed cylindrical shape is prepared. The case may have an opening at one end. The case may be made of a metal whose main component is iron, for example. The shape of the cylindrical portion of the case may be cylindrical or prismatic, for example.

In the first welding step, a line-shaped (or linear) laser beam is formed using a diffractive optical element, and the metal foil portion and the arm portion are welded together along a line weld part using the laser beam. The number of line-shaped laser beams may be the same as the number of arm portions. In this case, each arm portion is irradiated with a respective line beam. The line weld part can also be rephrased as a linear weld part. By welding the metal foil portion and the arm portion using a line-shaped laser beam by continuous-line welding as described above, the time required for the welding can be shortened, and thus the manufacturing costs of the power storage device can be reduced.

In the second welding step, the electrode group and the current collector plate are housed in the case, and the central portion of the current collector plate and the inner bottom surface of the case are welded at a central weld part. In this welding, laser welding can be used, for example. The central weld part may be a weld to be formed in a region including the center of the central portion. The central portion and the inner bottom surface of the case may be directly welded or indirectly welded with some conductive member therebetween. In the present specification, the central portion of the current collector plate and the inner bottom surface of the case are welded together in either configuration.

In the first welding step, a spot-shaped melt mark is formed at a part of the central portion of the current collector plate that is located on the outer circumferential side relative to the central weld part by zero-order light emitted from the diffractive optical element. In the first welding step, since the line-shaped laser beam is formed by the diffractive optical element as described above, the original output of the laser is relatively high. Accordingly, the energy of the zero-order light inevitably generated when the diffractive optical element is used is also high to some extent. Here, in the first welding step, a pressing plate for bringing the electrode group and the current collector plate into close contact with each other is used, as is well known to those skilled in the art. Each time the first welding step is performed, the pressing plate is irradiated with the zero-order light to be damaged. This will need replacement sooner or later. However, in the first welding step of the present disclosure, a spot-shaped melt mark is formed in the aforementioned part of the central portion by the zero-order light. This can be achieved by providing an opening in the pressing plate through which the zero-order light passes. That is, the pressing plate is not irradiated with the zero-order light in the first welding step of the present disclosure. This eliminates the need for replacement caused by the zero-order light. Therefore, the manufacturing costs of the power storage device can be further reduced.

Further, the arm portion of the current collector plate extends from the central portion toward the periphery (or outward in the radial direction). In the above configuration, the line-shaped laser beam irradiated to the arm portion also has a shape along the radial direction, and the pattern center of the laser beam coincides with the center of the central portion of the current collector plate. By contrast, a part of the central portion of the current collector plate that is located on the outer circumferential side relative to the central weld part is irradiated with the zero-order light. In other words, the diffractive optical element is used in the first welding step such that the irradiation point of the zero-order light and the pattern center of the line-shaped laser beam are displaced from each other. This can increase the diffraction efficiency of the diffractive optical element, thereby reducing the output of the laser required for welding in the first welding step.

The power storage device manufacturing method may further include an evaluation step of alternatively evaluating the state of the line weld part by evaluating the state of the melt mark instead. The state of the melt mark may include the diameter of the melt mark when the melt mark is circular, the shape of the melt mark, or presence or absence of the melt mark. The state of the line weld part may include its bonding strength, presence or absence of defects, or presence or absence of the line weld part. The melt mark is formed simultaneously with the line weld part, and both are derived from the same laser beam. Therefore, the state of the line weld part can be alternatively (or indirectly) evaluated by evaluating the state of the melt mark instead. For example, if the diameter of the spot-shaped melt mark is excessively small, it can be evaluated that the bonding strength of the line weld part is insufficient due to insufficient laser output.

### (Power Storage Device)

The power storage device according to the present disclosure may be a battery or a capacitor. Examples of the battery include primary batteries, such as lithium primary batteries, alkaline storage batteries (e.g., nickel-metal hydride batteries and nickel-cadmium batteries), and secondary batteries, such as lithium-ion secondary batteries and lithium-metal secondary batteries.

The power storage device according to the present disclosure has a so-called end face current collector configuration. The power storage device according to the present disclosure includes an electrode group, a case, and a current collector plate.

The electrode group is a wound electrode group including a first electrode and a second electrode. The outer shape of the electrode group may be columnar or prismatic, for example. The first electrode includes a metal foil portion exposed at one end of the electrode group in the axial direction.

The case is a bottomed cylindrical case that houses the electrode group. The case may house an electrolyte in addition to the electrode group. The shape of the cylindrical portion of the case may be cylindrical or prismatic, for example.

The current collector plate is electrically connected to the first electrode and the case. The current collector plate includes a central portion and at least one arm portion. The central portion is welded to the inner bottom surface of the case at a central weld part. The at least one arm portion extends from the central portion toward the periphery and is welded to the metal foil portion at a line weld part. In the above configuration, the above electrical connection is established.

A spot-shaped melt mark is formed at a part of the central portion of the current collector plate that is located on the outer circumferential side relative to the central weld part. Here, a pressing plate for bringing the electrode group and the current collector plate into close contact with each other is used in the step of forming the line weld part as described above. In the power storage device according to the present disclosure, a spot-shaped melt mark has been accordingly formed at the aforementioned part of the central portion. That is, the pressing plate is not subjected to irradiation with a laser beam for forming such a melt mark. This eliminates the need for replacement of the pressing plate that would be required due to laser-beam damage, resulting in reduction in the manufacturing costs of the power storage device.

According to the present disclosure, the manufacturing costs of the power storage device can be reduced by forming the line weld part by continuous-line welding as described above. According to the present disclosure, the manufacturing costs of the power storage device can be further reduced by eliminating the need for replacement of the pressing plate. Further, according to the present disclosure, the state of the line weld part can be alternatively evaluated by evaluating the state of the spot-shaped melt mark formed on the current collector plate instead.

The following specifically describes examples of the power storage device manufacturing method and the power storage device according to the present disclosure with reference to the drawings. The steps and elements of configuration described above can be applied to the steps and elements of configuration of the power storage device manufacturing method and the power storage device in the examples described below. The steps and elements of configuration of the power storage device manufacturing method and the power storage device in the examples described below can be altered based on the above description. Further, the matters described below may be applied to the embodiments described above. Among the steps and elements of configuration of the power storage device manufacturing method and the power storage device in the examples described below, a step or an element of configuration that is not essential to the power storage device manufacturing method or the power storage device according to the present disclosure may be omitted. It should be noted that the drawings indicated below are schematic and do not accurately reflect the shape or number of actual members.

In the following, a power storage device 10 of the present embodiment is described first, and a power storage device manufacturing method of the present embodiment is described then.

### (Power Storage Device)

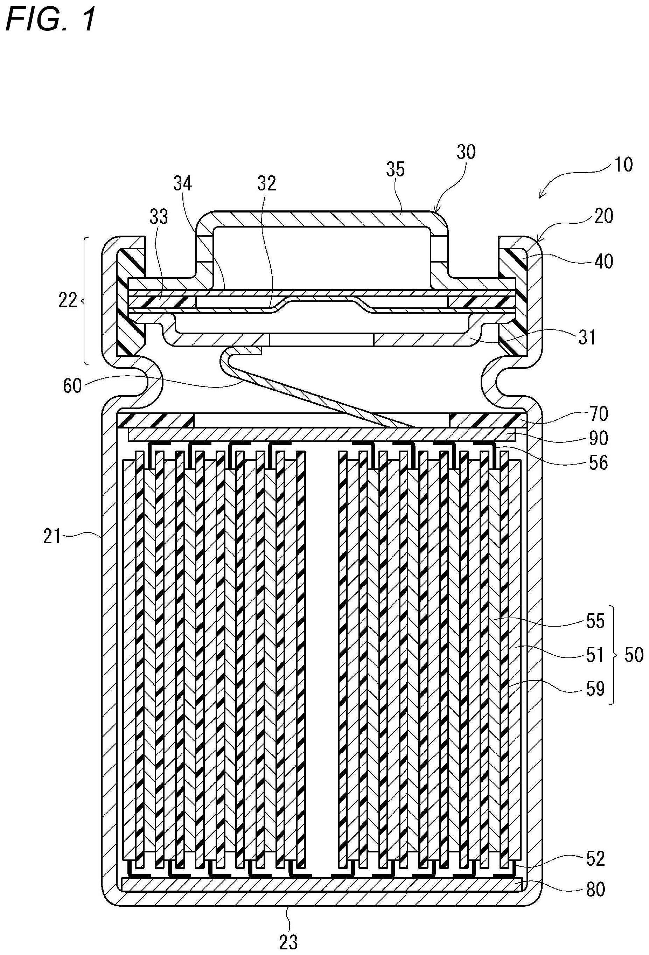

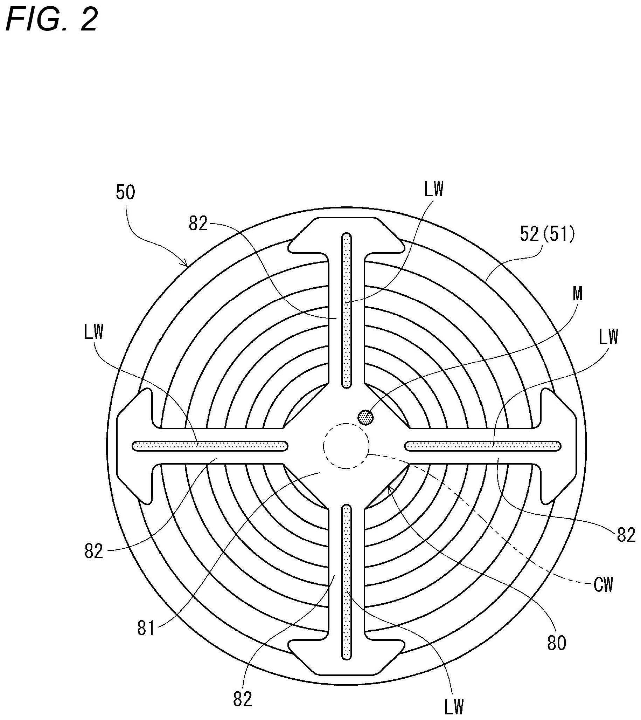

The power storage device 10 of the present embodiment is configured as a lithium-ion secondary battery, but is not limited thereto. As illustrated in FIGS. 1 and 2, the power storage device 10 includes a case 20, a sealing unit 30, an electrode group 50, a negative electrode current collector plate 80, and a positive electrode current collector plate 90. Note that the power storage device 10 of the present embodiment has a so-called end face current collector configuration on both the positive electrode side and the negative electrode side, but may instead have a current collecting configuration using a tab on one of the positive electrode side and the negative electrode side instead.

The case 20 is formed into a bottomed cylindrical shape having an opening at one end (an upper end in FIG. 1). The case 20 has a side wall portion 21 formed into a cylindrical shape and a disk-shaped bottom portion 23. A crimp 22 for fixing the sealing unit 30 is formed in a region of the side wall portion 21 in the vicinity of the opening. The case 20 of the present embodiment is made of a metal whose main component is iron, but is not limited thereto.

The sealing unit 30 seals the opening of the case 20. The sealing unit 30 has a configuration in which a filter 31, a lower valve body 32, an insulating member 33, an upper valve body 34, and a cap 35 are stacked in the stated order from the side of the electrode group 50. Each member constituting the sealing unit 30 has, for example, a disk shape or a ring shape, and each member except the insulating member 33 is electrically connected to each other. The insulating member 33 is made of an insulative resin, and the other members are made of a metal. The sealing unit 30 is fixed to the crimp of the case 20 with a gasket 40 having insulating properties therebetween.

The electrode group 50 is housed in the case 20 and includes a negative electrode 51 and a positive electrode 55. The electrode group 50 is a wound electrode group formed by winding the negative electrode 51 and the positive electrode 55 with a separator 59 therebetween. The outer shape of the electrode group 50 is columnar. The negative electrode 51 is electrically connected to the bottom portion 23 of the case 20 via a negative electrode current collector plate 80. In the above configuration, the case 20 functions as an external negative electrode terminal of the power storage device 10. The positive electrode 55 is electrically connected to the filter 31 of the sealing unit 30 via the positive electrode current collector plate 90 and a positive electrode lead 60. In the above configuration, the cap 35 of the sealing unit 30 functions as an external positive electrode terminal of the power storage device 10. A ring-shaped insulation plate 70 is provided between the electrode group 50 and the sealing unit 30. The negative electrode 51 is an example of the first electrode, and the positive electrode 55 is an example of the second electrode.

The negative electrode 51 includes a negative electrode metal foil portion 52 exposed at one end (a lower end in FIG. 1) of the electrode group 50 in the axial direction. The negative electrode metal foil portion 52 is a region of the negative electrode current collector where a negative electrode active material layer is not formed. The negative electrode metal foil portion 52 is an example of the metal foil portion.

The positive electrode 55 includes a positive electrode metal foil portion 56 exposed at the other end (an upper end in FIG. 1) of the electrode group 50 in the axial direction. The positive electrode metal foil portion 56 is a region of the positive electrode current collector where a positive electrode active material layer is not formed.

The negative electrode current collector plate 80 is electrically connected to the negative electrode 51 and the case 20. As illustrated in FIG. 2, the negative electrode current collector plate 80 is formed into a substantially cross shape. The negative electrode current collector plate 80 includes a negative electrode central portion 81 and four negative electrode arm portions 82 extending from the negative electrode central portion 81 toward the periphery. The negative electrode central portion 81 is welded to the bottom portion 23 of the case 20 at a central weld part CW (indicated by the phantom line in FIG. 2). Each of the negative electrode arm portions 82 are welded to the negative electrode metal foil portion 52 at a respective line weld part LW. The negative electrode current collector plate 80 is an example of the current collector plate. The negative electrode central portion 81 is an example of the central portion. The negative electrode arm portions 82 each are an example of the arm portion.

As illustrated in FIG. 2, a spot-shaped melt mark M is formed at a part of the negative electrode central portion 81 that is located on the outer circumferential side relative to the central weld part CW. As will be described later, the spot-shaped melt mark M can be formed by the zero-order light emitted from a diffractive optical element used in formation of each line weld part LW.

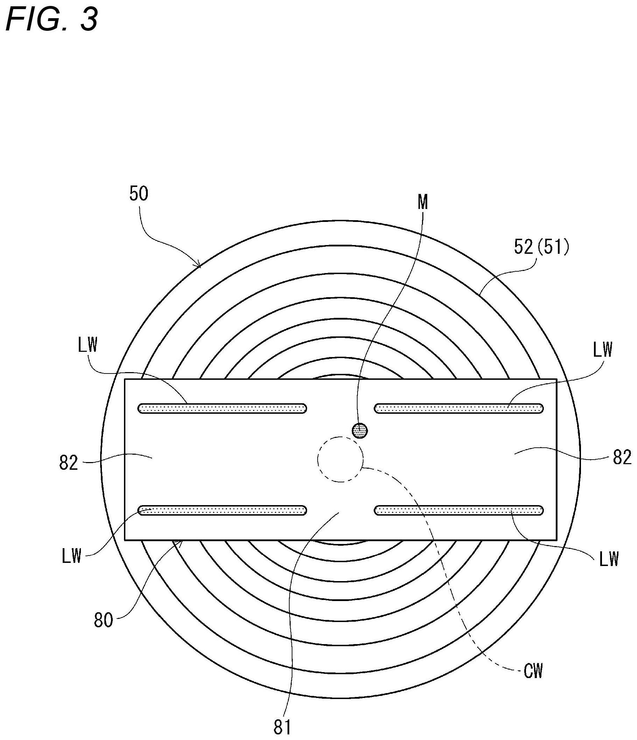

Note that the negative electrode current collector plate 80 may be formed into a rectangular shape as illustrated in FIG. 3. In this case, the negative electrode current collector plate 80 includes a negative electrode central portion 81 and two negative electrode arm portions 82 extending from the negative electrode central portion 81 toward the periphery. The negative electrode central portion 81 is welded to the bottom portion 23 of the case 20 at a central weld part CW (indicated by a phantom line in FIG. 3). The negative electrode arm portions 82 are welded to the negative electrode metal foil portion 52 at the respective two line weld parts LW.

The positive electrode current collector plate 90 is electrically connected to the positive electrode 55. The positive electrode current collector plate 90 is formed into a substantially cross shape, similar to the negative electrode current collector plate 80. The positive electrode current collector plate 90 includes a positive electrode central portion and four positive electrode arm portions extending from the positive electrode central portion toward the periphery (each not illustrated). Each of the positive electrode arm portions may be welded to the positive electrode metal foil portion 56 at a respective line weld part (not illustrated).

### (Power Storage Device Manufacturing Method)

Next, a power storage device manufacturing method according to the present embodiment will be described. Not only the power storage device 10 of the present embodiment described above but also other types of power storage devices can be manufactured by the power storage device manufacturing method of the present embodiment. The power storage device manufacturing method includes a first preparation step, a second preparation step, a third preparation step, a first welding step, a second welding step, and an evaluation step.

In the first preparation step, a wound electrode group 50 including a positive electrode 55 and a negative electrode 51 is prepared. The electrode group 50 may be the one as described above.

In the second preparation step, a negative electrode current collector plate 80 including a negative electrode central portion 81 and four negative electrode arm portions 82 is prepared. The negative electrode current collector plate 80 may be the one described above.

In the third preparation step, a case 20 having a bottomed cylindrical shape is prepared. The case 20 may be the one described above.

In the first welding step, laser beams with a line shape are formed using a non-illustrated diffractive optical element, and the negative electrode metal foil portion 52 of the electrode group 50 and the negative electrode arm portions 82 of the negative electrode current collector plate 80 are welded together at the respective line weld parts LW using the laser beams. In doing so, the negative electrode current collector plate 80 is pressed against the negative electrode metal foil portion 52 using a pressing plate (not illustrated) having an opening. Simultaneously with the above welding, a spot-shaped melt mark M is formed at a part of the negative electrode central portion 81 that is located on the outer circumferential side relative to the central weld part CW by the zero-order light emitted from the diffractive optical element in the first welding step. At that time, the zero-order light passes through the opening of the pressing plate and irradiates the part of the negative electrode central portion 81.

In the second welding step, the electrode group 50 and the negative electrode current collector plate 80 are housed in the case 20, and the negative electrode central portion 81 and the bottom portion 23 of the case 20 are welded together at the central weld part CW. Laser welding can be used for this welding.

In the evaluation step, the state of the line weld part LW is alternatively evaluated by evaluating the state of the spot-shaped melt mark M instead. The following indicates some specific examples of grades for evaluation. First, if the diameter of the melt mark M falls within a predetermined acceptable range, it can be determined that the line weld parts LW have been properly formed. Next, if the diameter of the melt mark M exceeds the acceptable range, it can be determined that the line weld parts LW have been formed improperly due to excessively high laser output or displacement of the focal point. By contrast, if the diameter of the melt mark M is less than the acceptable range, it can be determined that the line weld parts LW have been formed improperly due to insufficient laser output. Alternatively, if the shape of the melt mark M is defective, for example, if a part of the melt mark M is missing although it is circular ideally, it can be determined that the line weld parts LW have been formed improperly due to the laser profile being defective. Lastly, if the melt mark M is not present, it can be determined that the line weld parts LW have not been formed due to no laser irradiation.

### <<Supplemental Note>>

According to the above description of the embodiments, the following techniques are disclosed.

### (Technique 1)

A power storage device manufacturing method including:
a first preparation step of preparing a wound electrode group including a first electrode and a second electrode, the first electrode including a metal foil portion exposed at one end of the electrode group in an axial direction;
a second preparation step of preparing a current collector plate including a central portion and at least one arm portion extending from the central portion toward a periphery;
a third preparation step of preparing a case having a bottomed cylindrical shape;
a first welding step of forming a laser beam with a line shape using a diffractive optical element, and welding the metal foil portion and the at least one arm portion together at a respective line weld part using the laser beam; and
a second welding step of housing the electrode group and the current collector plate in the case, and welding the central portion and an inner bottom surface of the case together at a central weld part,
wherein in the first welding step, a spot-shaped melt mark is formed at a part of the central portion that is located on an outer circumferential side relative to the central weld part by zero-order light emitted from the diffractive optical element.

### (Technique 2)

The power storage device manufacturing method according to Technique 1, further including:
an evaluation step of alternatively evaluating a state of the line weld part by evaluating a state of the melt mark instead.

### (Technique 3)

A power storage device including:
a wound electrode group including a first electrode and a second electrode;
a case with a bottomed cylindrical shape that houses the electrode group; and
a current collector plate electrically connected to the first electrode and the case,
wherein the first electrode includes a metal foil portion exposed at one end of the electrode group in an axial direction,
the current collector plate includes a central portion welded to an inner bottom surface of the case at a central weld part, and at least one arm portion that extends from the central portion toward a periphery and that is welded to the metal foil portion at a line weld part, and
a spot-shaped melt mark is formed at a part of the central portion that is located on an outer circumferential side relative to the central weld part.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Industrial Applicability]

The present disclosure can be used in methods for manufacturing a power storage device and power storage devices.

### [Reference Signs List]

10: Power storage device
   20: Case
      21: Side wall portion
      22: Crimp
      23: Bottom portion
   30: Sealing unit
      31: Filter
      32: Lower valve body
      33: Insulating member
      34: Upper valve body
      35: Cap
   40: Gasket
   50: Electrode group
      51: Negative electrode (first electrode)
         52: Negative electrode metal foil portion (metal foil portion)
      55: Positive electrode (second electrode)
         56: Positive electrode metal foil portion
      59: Separator
   60: Positive electrode lead
   70: Insulation plate
   80: Negative electrode current collector plate (current collector plate)
      81: Negative electrode central portion (central portion)
      82: Negative electrode arm portion (arm portion)
   90: Positive electrode current collector plate
CW: Central weld part
LW: Line weld part
M: Melt mark

## Claims

1. A power storage device manufacturing method comprising:
a first preparation step of preparing a wound electrode group including a first electrode and a second electrode, the first electrode including a metal foil portion exposed at one end of the electrode group in an axial direction;
a second preparation step of preparing a current collector plate including a central portion and at least one arm portion extending from the central portion toward a periphery;
a third preparation step of preparing a case having a bottomed cylindrical shape;
a first welding step of forming a laser beam with a line shape using a diffractive optical element, and welding the metal foil portion and the at least one arm portion together at a respective line weld part using the laser beam; and
a second welding step of housing the electrode group and the current collector plate in the case, and welding the central portion and an inner bottom surface of the case together at a central weld part,
wherein in the first welding step, a spot-shaped melt mark is formed at a part of the central portion that is located on an outer circumferential side relative to the central weld part by zero-order light emitted from the diffractive optical element.

2. The power storage device manufacturing method according to claim 1, further comprising:
an evaluation step of alternatively evaluating a state of the line weld part by evaluating a state of the melt mark instead.

3. A power storage device comprising:
a wound electrode group including a first electrode and a second electrode;
a case with a bottomed cylindrical shape that houses the electrode group; and
a current collector plate electrically connected to the first electrode and the case,
wherein the first electrode includes a metal foil portion exposed at one end of the electrode group in an axial direction,
the current collector plate includes a central portion welded to an inner bottom surface of the case at a central weld part, and at least one arm portion that extends from the central portion toward a periphery and that is welded to the metal foil portion at a line weld part, and
a spot-shaped melt mark is formed at a part of the central portion that is located on an outer circumferential side relative to the central weld part.
